Europäisches Patentamt

European Patent Office

Office européen des brevets

(11) Numéro de publication: **0 410 503 A1**

## DEMANDE DE BREVET EUROPEEN

(21) Numéro de dépôt: 90201899.3

(22) Date de dépôt: **12.07.90**

(51) Int. Cl.5: **B65D 90/50**, G01M 3/18

(30) Priorité: **27.07.89 FR 8910283**

(43) Date de publication de la demande:
**30.01.91 Bulletin 91/05**

(84) Etats contractants désignés:
**AT BE CH DE DK ES FR GB GR IT LI LU NL SE**

(71) Demandeur: **Durand, Alain**
**Quartier St-Hilaire, Ch. Collet du Maroc**
**F-13111 Coudoux(FR)**

(72) Inventeur: **Durand, Alain**
**Quartier St-Hilaire, Ch. Collet du Maroc**
**F-13111 Coudoux(FR)**

(74) Mandataire: **Barre, Philippe**
**Cabinet Barre-Gatti-Laforgue 95 rue des**
**Amidonniers**
**F-31069 Toulouse Cédex(FR)**

(54) **Procédé de fabrication ou de réhabilitation d'un réservoir de stockage, réservoirs obtenus.**

(57) L'invention concerne un procédé de fabrication ou de réhabilitation d'un réservoir de stockage, en particulier réservoir de stockage enterré d'hydrocarbures. Ce procédé consiste à réaliser une succession alternée d'épaisseurs électriquement isolantes ($I_1$, $I_2$, $I_3$) et d'épaisseurs électriquement conductrices ($C_1$, $C_2$, $C_3$), et à disposer entre au moins trois épaisseurs conductrices un dispositif différentiel de surveillance (7, 8) de la capacité électrique et/ou de la résistance électrique entre lesdites épaisseurs. L'invention permet de détecter toute fuite afin d'éviter une pollution extérieure de l'environnement ou une pollution intérieure du produit stocké, en cas d'apparition d'un défaut. Elle peut être appliquée pour fabriquer des réservoirs de stockage neufs ou pour réhabiliter les réservoirs existants, en particulier réservoirs simple enveloppe.

FIG. 1

EP 0 410 503 A1

## PROCEDE DE FABRICATION OU DE REHABILITATION D'UN RESERVOIR DE STOCKAGE, RESERVOIRS OBTENUS

L'invention concerne un procédé de fabrication ou de réhabilitation de réservoirs de stockage ; elle s'applique en particulier pour réaliser ou réhabiliter des réservoirs de stockage enterrés d'hydrocarbures.

Dans la plupart des pays, les normes de pollution deviennent de plus en plus sévères et, dans le cas des réservoirs d'hydrocarbures, il devient souhaitable, aussi bien pour les réservoirs neufs que pour les réservoirs réhabilités, de s'assurer de leur stricte étanchéité, enfin d'écarter les risques de pollution de l'environnement. Actuellement certains réservoirs sont intérieurement munis d'une enveloppe souple en PVC et une pompe à vide permet de faire le vide entre le réservoir et cette enveloppe : la détection d'une dérive de la dépression entre ces éléments fournit une indication de défaut d'étanchéité. Toutefois, les enveloppes souples utilisées ne sont pas compatibles avec certains hydrocarbures et sont de toute façon un organe fragile qui rend ce procédé peu fiable ; en outre, il requiert un appareillage de mise sous vide délicat et coûteux.

Par ailleurs, des réservoirs ou citernes ont été revêtus de couches électriquement conductrices alternées avec des couches isolantes, afin de mesurer les modifications de capacité ou de résistance entre ces couches et ainsi de détecter les fuites (FR-A-2.089.513, US-A-4.110.739, FR-A-2.158.700...). Toutefois, ces réservoirs enterrés sont plongés dans un milieu dont les paramètres sont très variables (température, hygrométrie...) et ces dispositifs sont peu fiables et engendrent de nombreuses alarmes erronées qui conduisent les usagers à considérer leurs indications comme non significatives.

La présente invention se propose d'indiquer un nouveau procédé pour fabriquer ou réhabiliter un réservoir permettant une détection fiable de fuite afin d'éviter une pollution extérieure de l'environnement ou une pollution intérieure du produit stocké en cas d'apparition d'un défaut.

Un autre objectif est d'obtenir un réservoir qui soit en conformité avec les normes et, à cet égard, le procédé de l'invention peut notamment être appliqué pour réhabiliter et mettre en conformité des réservoirs simple enveloppe déjà en place, même en dehors de tout besoin de réparation.

A cet effet, le procédé visé par l'invention pour la fabrication ou la réhabilitation d'un réservoir de stockage consiste à réaliser une succession alternée d'épaisseurs électriquement isolantes et d'épaisseurs électriquement conductrices ; selon la présente invention l'on réalise au moins trois épaisseurs conductrices et l'on relie à celles-ci un dispositif différentiel de surveillance comprenant :
. un pont différentiel de mesure capacitive, adapté pour délivrer un signal représentatif de la grandeur

$$\frac{\Delta (mc_1 - c_1c_2)}{mc_1 - c_1c_2}$$

où $mc_1$ est la capacité du condensateur défini par une paire de deux épaisseurs conductrices successives, $c_1c_2$ la capacité du condensateur défini par une autre paire de deux couches conductrices successives et $\Delta (mc_1 - c_1c_2)$ les variations différentielles de ces capacités,
. un comparateur adapté pour délivrer un signal en tout ou rien fonction de la valeur de la grandeur précité par rapport à un seuil de consigne,
. au moins, un organe avertisseur adapté pour être déclenché par le signal issu du comparateur.

Le procédé de l'invention permet ainsi de détecter toute infiltration d'hydrocarbure du réservoir vers l'extérieur en s'affranchissant des causes d'erreurs des dispositifs connus. Selon un mode de mise en oeuvre préféré, l'on relie également aux épaisseurs conductrices un dispositif résistif de surveillance de type différentiel apte à permettre de repérer les éventuelles infiltrations d'eau depuis l'extérieur, ce dispositif comprenant :
. un pont différentiel de mesure résistive, adapté pour délivrer un signal représentatif de la grandeur

$$\frac{\Delta (i_1 - i_2)}{i_1 - i_2}$$

où $i_1$ est la résistance de la couche isolante située entre deux couches conductrices successives, $i_2$ la résistance de la couche isolante située entre deux autres couches conductrices successives et $\Delta (i_1 - i_2)$ les variations différentielles de ces résistances,
. un comparateur adapté pour délivrer un signal en tout ou rien fonction de la valeur de la grandeur précité par rapport un seuil de consigne,
. au moins, un organe avertisseur adapté pour être déclenché par le signal issu du comparateur.

Le procédé de l'invention peut être appliqué pour réhabiliter un réservoir de stockage composé d'une paroi métallique et consiste alors :
. à appliquer sur ladite paroi métallique une succession d'au moins trois couches de résine synthétique renforcée électriquement isolante, et d'au moins deux couches de résine synthétique électriquement conductrice,

. et à relier par des conducteurs électriques la paroi métallique et deux couches conductrices au dispositif différentiel de surveillance.

Il peut également être appliqué pour fabriquer un réservoir de stockage neuf et consiste dans ce cas :

. à réaliser, sur une forme, une succession alternée d'au moins trois couches de résine synthétique renforcée électriquement isolante et d'au moins trois couches de résine synthétique électriquement conductrice,

. et à relier par des conducteurs électriques les couches conductrices au dispositif différentiel de surveillance.

De façon connue en soi, chaque couche isolante d'épaisseur comprise entre 0,5 et 4 mm est en particulier appliquée par projection de résine de type polyester, epoxy ou vinyle ester et applications successives de matériau de renfort de type fibres ou tissus de verre. Chaque couche conductrice d'épaisseur plus réduite (notamment de l'ordre de 50 microns) est en particulier appliquée par projection de résine de type polyester, epoxy ou vinyle ester, chargée au moyen d'une poudre conductrice, en particulier métallique ou de graphite.

L'invention s'étend aux réservoirs de stockage fabriqués ou réhabilités par mise en oeuvre du procédé précité.

D'autres caractéristiques, buts et avantages de l'invention ressortiront de la description qui suit en référence aux dessins annexés qui illustrent le procédé de l'invention ; sur ces dessins :

- la figure 1 est une vue en coupe transversale par un plan A d'un réservoir réhabilité conformément à l'invention (l'épaisseur de la paroi ayant été augmentée par rapport au diamètre pour rendre la figure plus claire),

- la figure 2 en est une vue en coupe longitudinale par un plan B,

- la figure 3 est une coupe à échelle dilatée de la paroi du réservoir,

- la figure 4 est un schéma synoptique du dispositif de surveillance qui équipe le réservoir,

- la figure 5 présente, en variante, une coupe partielle de la paroi d'un réservoir neuf fabriqué conformément à l'invention.

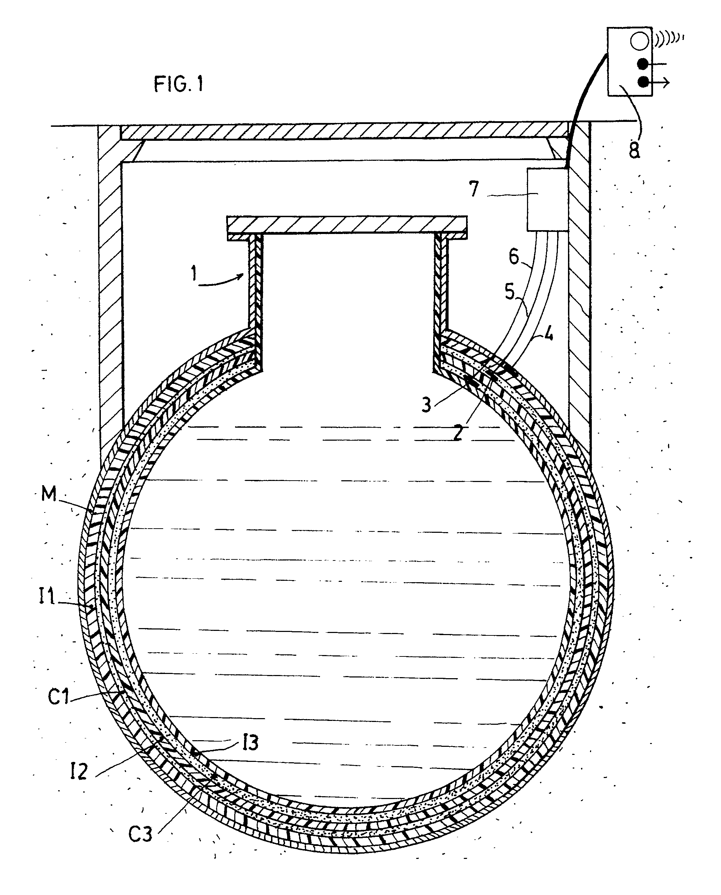

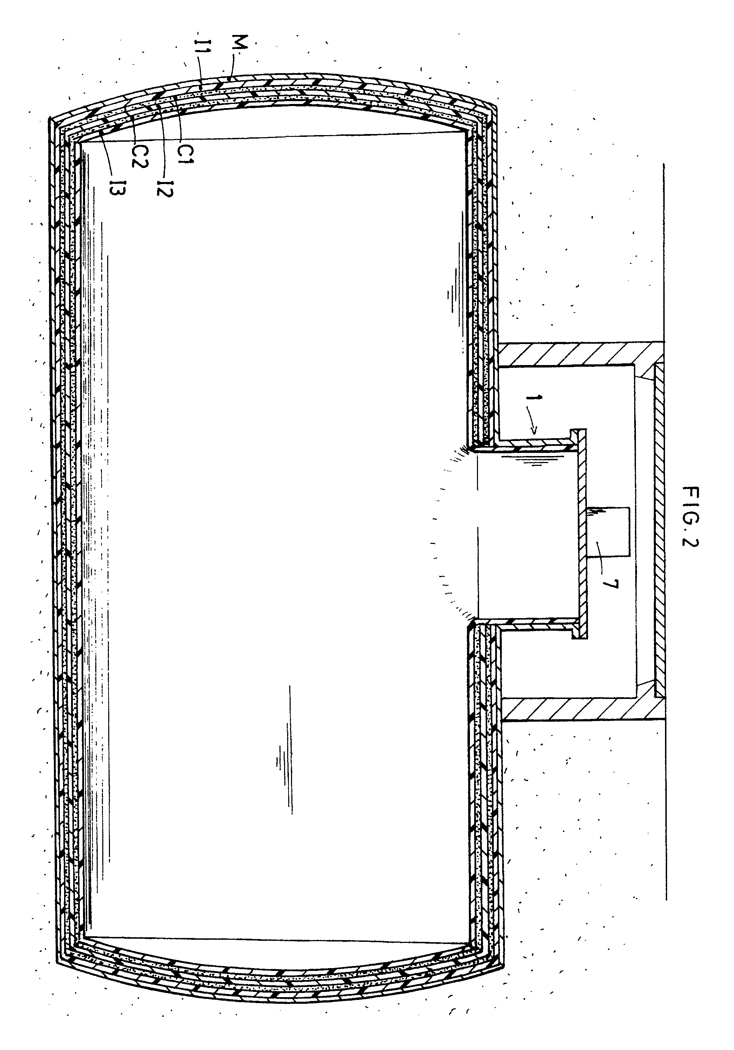

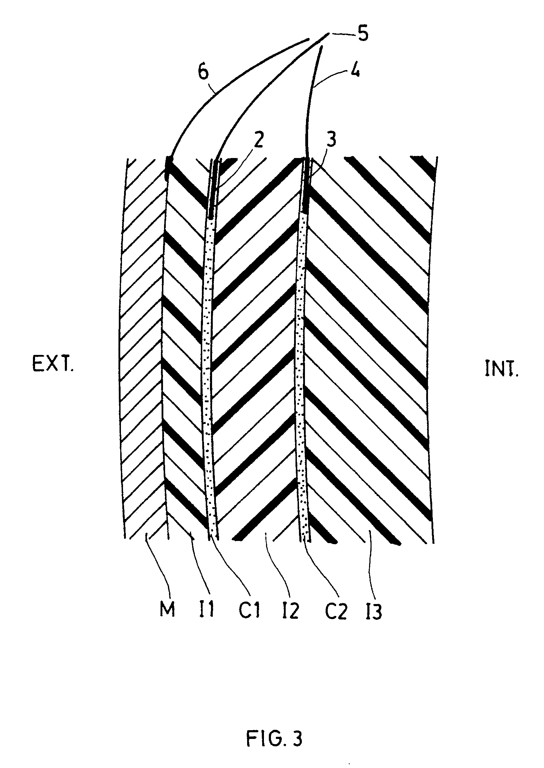

Le réservoir à réhabiliter visé aux figures 1 à 4 est un réservoir cylindrique d'axe horizontal, à simple enveloppe en acier, servant au stockage enterré d'hydrocarbure ; ce réservoir dont on aperçoit l'enveloppe en acier en M (dite paroi métallique) comporte une ouverture d'accès supérieure 1 (ou trou d'homme).

La paroi métallique M est d'abord soumise aux opérations de nettoyages mécaniques classiques (brossage, grattage, meulage, grenaillage...) de façon que sa face interne présente un état de surface approprié pour l'application de la première couche de revêtement.

Cette couche est une couche isolante $I_1$, réalisée en projetant sur la face interne de la paroi M une résine polyester renforcée de fibres de verre en vue de constituer une couche stratifiée renforcée. Cette couche dont l'épaisseur est en particulier de l'ordre de 1 mm est appliquée sous contrôle de température et d'humidité de façon connue en soi : application de résine sur la paroi, application de couches successives et croisées de fibres de verre imprégnées de résine, application de résine pour le vernissage en surface du stratifié. En l'exemple cette couche $I_1$ est appliquée sur toute la face interne de la paroi M jusqu'à affleurer la base du trou d'homme.

Puis, avant que la couche $I_1$ soit totalement polymérisée, l'on applique une couche conductrice $C_1$, réalisée en projetant, sur la face interne de la couche $I_1$, une résine polyester chargée au moyen d'une poudre de nickel. L'épaisseur de cette couche est en particulier de l'ordre de 50 microns. Elle est appliquée de façon à venir affleurer la base du trou d'homme.

Dans cette couche $C_1$ (au voisinage du trou d'homme), est noyé un contact électrique 2 (fine lamelle de cuivre reliée à un conducteur).

Avant polymérisation totale de la couche $C_1$, une nouvelle couche isolante renforcée $I_2$ est ensuite appliquée sur la face interne de la couche $C_1$, dans les mêmes conditions que la couche isolante $I_1$. L'épaisseur de cette couche isolante $I_2$ est en particulier de l'ordre de 2 mm.

Avant polymérisation totale de cette couche isolante $I_2$, une nouvelle couche conductrice $C_2$ est appliquée sur la face interne de la couche $I_2$. Cette couche est identique à la couche $C_1$ avec un contact électrique 3 noyé dans celle-ci.

Enfin sur la face interne de cette couche $C_2$ est appliquée une nouvelle couche isolante de résine renforcée $I_3$ analogue aux couches $I_1$ et $I_2$ ; cette couche $I_3$ peut en particulier présenter une épaisseur de l'ordre de 3 mm. Elle est appliquée sur toute l'enveloppe jusqu'à l'extrémité supérieure du trou d'homme.

La paroi métallique M, et les contacts électriques 2 et 3 sont reliés par des conducteurs électriques 4, 5 et 6 à un dispositif différentiel de surveillance (boîtier 7) apte à déclencher des alarmes visuelles et sonores (boîtier 8).

Ce dispositif de surveillance est apte à assurer, à la fois, une mesure différentielle de capacité et une mesure différentielle de résistance afin de détecter aussi bien les défauts provenant d'une fuite d'hydrocarbure vers l'extérieur que ceux provenant d'infiltration d'eau vers l'intérieur.

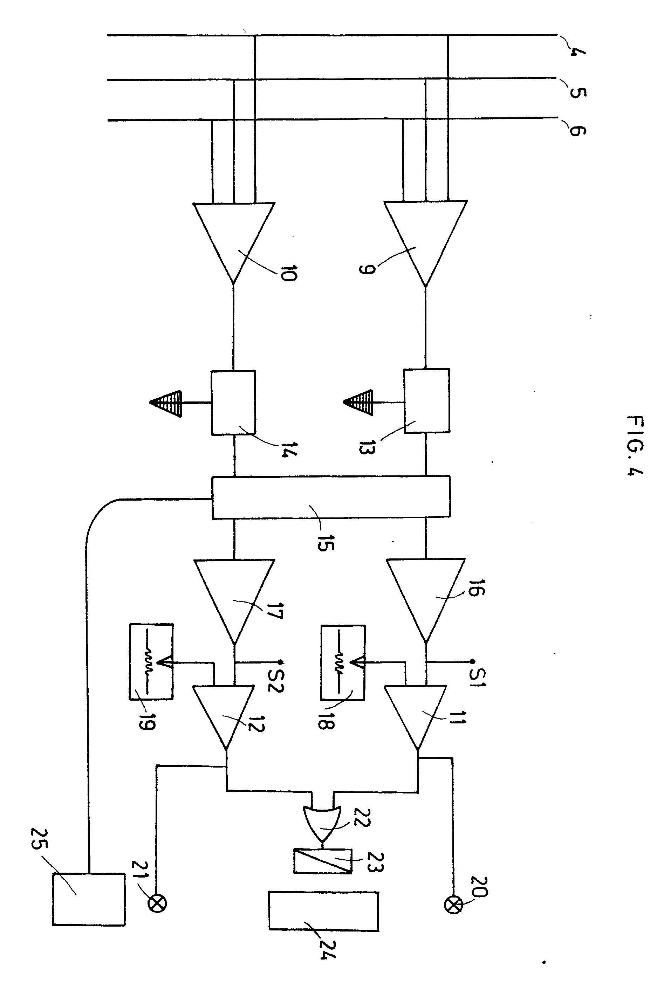

A cet effet, il comprend, d'une part, un pont différentiel de mesure capacitive 9, d'autre part, un pont différentiel de mesure résistive 10 (figure 4).

Le pont 9 est adapté pour délivrer un signal représentatif de la grandeur

$$\frac{\triangle(mc_1 - c_1c_2)}{mc_1 - c_1c_2}$$

où $mc_1$ est la capacité du condensateur défini par les épaisseurs conductrices M et $C_1$, $c_1c_2$ la capacité du condensateur défini par les épaisseurs conductrices $C_1$ et $C_2$, et $\triangle(mc_1 - c_1c_2)$ les variations différentielles de ces capacités.

Le pont 10 est adapté pour délivrer un signal représentatif de la grandeur

$$\frac{\triangle(i_1 - i_2)}{i_1 - i_2}$$

où $i_1$ est la résistance de la couche isolante $l_1$ située entre les deux épaisseurs conductrices M et $C_1$, $i_2$ la résistance de la couche isolante $l_2$ située entre les deux épaisseurs conductrices $C_1$ et $C_2$, et $\triangle(i_1 - i_2)$ les variations différentielles de ces résistances.

Les signaux issus des ponts 9 et 10 sont délivrés vers des comparateurs 11 et 12, via des barrières de sécurité intrinsèques 13 et 14 évitant une remontée du signal de puissance, une unité de multiplexage 15 permettant une prise en compte séquentielle d'un signal ou de l'autre et des amplificateurs d'adaptation 16 et 17.

En amont des comparateurs 11 et 12 des sorties $S_1$ et $S_2$ permettent le cas échéant de prélever la tension présente en vue d'une visualisation des signaux.

Chaque comparateur est connecté à un générateur de consigne 18 ou 19 (seuil de consigne $\triangle$ C et seuil de consigne $\triangle$R) et est adapté pour délivrer un signal en tout ou rien fonction de la valeur de la grandeur différentielle précitée par rapport au seuil de consigne concerné.

Le signal issu de chaque comparateur est délivré vers un voyant : voyant de défaut capacitif 20 et voyant de défaut résistif 21.

Ces signaux sont également délivrés à travers une porte OU 22 vers un relais 23 qui déclenche une alarme sonore 24 en cas d'apparition d'un défaut.

Une alimentation basse tension 25 (sur batterie ou branchée sur le réseau) alimente l'ensemble du circuit électrique.

La partie : voyant, relais d'alarme et alarme, alimentation, est disposée en surface dans le boîtier 8, l'autre partie étant disposée dans le boîtier 7 sous le couvercle de la fosse contenant le réservoir.

En cas de fuite d'hydrocarbure du réservoir vers l'extérieur, l'infiltration de ce corps modifie en premier lieu la capacité $c_1c_2$, la détection différentielle de cette variation étant très sensible. Le voyant 20 s'allume, le voyant 21 reste éteint, l'alarme est déclenchée.

En cas de rentrée d'eau, celle-ci s'infiltre entre les couches externes et crée des poches qui vont à la fois modifier la capacité du condensateur $mc_1$ et la résistance $i_1$ entre les épaisseurs conductrices M et $C_1$. Les deux voyants s'allument et l'alarme est déclenchée.

Il est à noter qu'une variation de température conditionne une variation similaire des capacités et résistances et n'est donc pas prise en compte par les mesures différentielles.

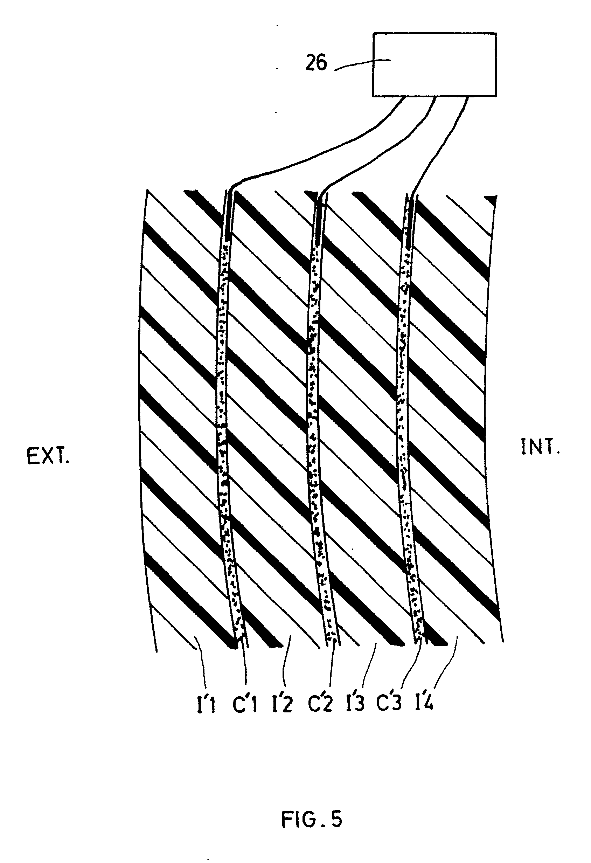

En variante, on a schématisé à la figure 5 la structure d'une paroi de réservoir fabriqué conformément au procédé de l'invention ; cette paroi comprend une succession de quatre couches isolantes de résine renforcées $l'_1$, $l'_2$, $l'_3$, $l'_4$ entre lesquelles sont interposées trois couches conductrices de résine $C'_1$, $C'_2$, $C'_3$. Ces couches sont analogues à celles déjà décrites. La couche interne $l'_4$ est mise en place la première par application sur une forme.

Comme précédemment, les couches conductrices sont reliées à un dispositif différentiel de surveillance capacitive et résistive, symbolisé en 26.

**Revendications**

1/ - Procédé de fabrication ou de réhabilitation d'un réservoir de stockage, consistant à réaliser une succession alternée d'épaisseurs électriquement isolantes et d'épaisseurs électriquement conductrices, caractérisé en ce que l'on réalise au moins trois épaisseurs conductrices et l'on relie à celles-ci un dispositif différentiel de surveillance comprenant :
- un pont différentiel de mesure capacitive (9), adapté pour délivrer un signal représentatif de la grandeur

$$\frac{\triangle(mc_1 - c_1c_2)}{mc_1 - c_1c_2}$$

où $mc_1$ est la capacité du condensateur défini par une paire de deux épaisseurs conductrices successives, $c_1c_2$ la capacité du condensateur défini par une autre paire de deux couches conductrices successives et $\Delta(mc_1 - c_1c_2)$ les variations différentielles de ces capacités,

. un comparateur (11) adapté pour délivrer un signal en tout ou rien fonction de la valeur de la grandeur précité par rapport à un seuil de consigne,

. au moins, un organe avertisseur (20, 24) adapté pour être déclenché par le signal issu du comparateur.

2/ Procédé selon la revendication 1, caractérisé en ce que l'on relie également aux épaisseurs conductrices un dispositif résistif de surveillance comprenant :

. un pont différentiel de mesure résistive (10), adapté pour délivrer un signal représentatif de la grandeur

$$\frac{\Delta(i_1 - i_2)}{i_1 - i_2}$$

où $i_1$ est la résistance de la couche isolante située entre deux couches conductrices successives, $i_2$ la résistance de la couche isolante située entre deux autres couches conductrices successives et $\Delta(i_1 - i_2)$ les variations différentielles de ces résistances,

. un comparateur (12) adapté pour délivrer un signal en tout ou rien fonction de la valeur de la grandeur précité par rapport à un seuil de consigne,

. au moins, un organe avertisseur (21, 24) adapté pour être déclenché par le signal issu du comparateur.

3/ - Procédé selon la revendication 2, comprenant un dispositif de surveillance apte à assurer, à la fois, une mesure différentielle de capacité et une mesure différentielle de résistance, caractérisé en ce que les signaux en tout ou rien issus des comparateurs sont délivrés vers un relais d'alarme (23) à travers une porte logique OU (22).

4/ - Procédé selon l'une des revendications 1, 2 ou 3 pour la réhabilitation d'un réservoir de stockage composé d'une paroi métallique (M), dans lequel :

. l'on applique, sur la face interne de la paroi métallique (M), une couche isolante ($l_1$),

. l'on applique, sur la face interne de la couche ($l_1$), une couche conductrice ($C_1$),

. l'on applique, sur la face interne de la couche ($C_1$), une nouvelle couche isolante ($l_2$),

. l'on applique, sur la face interne de la couche ($l_2$), une nouvelle couche conductrice ($C_2$),

. l'on applique, sur la face interne de la couche ($C_2$), une nouvelle couche isolante ($l_3$),

. l'on relie la paroi métallique (M), la couche conductrice ($C_1$) et la couche conductrice ($C_2$) au dispositif de surveillance différentiel.

5/ - Procédé selon la revendication 4, caractérisé en ce que l'on applique des couches isolants $l_1$, $l_2$ et $l_3$ d'épaisseurs comprises entre environ 0,5 mm et 4 mm, croissant depuis la paroi métallique (M) vers l'intérieur du réservoir.

6/ - Procédé selon l'une des revendications 1, 2 ou 3 pour la fabrication d'un réservoir de stockage, dans lequel :

. l'on réalise, sur un forme, une succession alternée d'au moins trois couches de résine synthétique renforcée, électriquement isolante ($l'_1 ... l'_4$), et d'au moins trois couches de résine synthétique électriquement conductrice ($C'_1 ... C'_3$),

. et l'on relie par des conducteurs électriques les couches conductrices au dispositif de surveillance différentiel (26).

7/ - Procédé selon l'une des revendications 1 à 6, dans lequel les couches isolantes sont appliquées par projection de résine de type polyester, epoxy ou vinyle ester et applications successives de matériau de renfort de type fibres ou tissus de verre.

8/ - Procédé selon l'une des revendications 1 à 7, dans lequel les couches conductrices sont appliquées par projection de résine de type polyester, epoxy ou vinyle ester, chargée au moyen d'une poudre conductrice, en particulier métallique ou de graphite.

9/ - Réservoir de stockage réhabilité par le procédé conforme à la revendication 4, comprenant une paroi métallique (M), caractérisé en ce qu'il comporte sur la face interne de la paroi métallique, une succession alternée, d'au moins trois couches de résine synthétique renforcée électriquement isolante ($l_1 ... l_3$) et d'au moins deux couches de résine synthétique électriquement conductrice ($C_1$, $C_2$), la paroi métallique et deux couches conductrices étant reliées à un dispositif différentiel de surveillance capacitive (7, 8).

10/ - Réservoir de stockage fabriqué par le procédé conforme à la revendication 6, caractérisé en ce qu'il comprend une succession alternée d'au moins trois couches de résine synthétique renforcée électriquement isolante ($l'_1 ... l'_4$) et au moins trois couches de résine synthétique électriquement conductrice ($C'_1 ... C'_3$), trois couches conductrices étant reliées à un dispositif différentiel de surveillance capacitive (26).

11/ - Réservoir de stockage selon l'une des revendications 9 ou 10, caractérisé en ce que son dispositif différentiel de surveillance capacitive est associé à un dispositif différentiel de surveillance résistive.

FIG. 1

FIG.2

EXT.

INT.

M   I1   C1   I2   C2   I3

FIG. 3

FIG. 4

26

EXT.

INT.

I'1  C'1  I'2  C'2  I'3  C'3  I'4

FIG.5

Office européen
des brevets

**RAPPORT DE RECHERCHE
EUROPEENNE**

Numéro de la demande

**EP 90 20 1899**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 089 513  (LA PLAST ANSTALT)<br>* page 2, ligne 10 - page 3, ligne 9; revendications ; figure 2 * | 1,2,4-10 | B 65 D 90/50<br>G 01 M 3/18 |
| D,A | US-A-4 110 739  (KIDD)<br>* le document en entier * | 1,2,4-10 | |
| D,A | FR-A-2 158 700  (CORMIER)<br>* page 4, lignes 3 - 37; revendications 7-9 * | 1,2,4-10 | |
| A | FR-A-1 551 051  (WOLFGANG OECHSSLER)<br>* page 4, colonne de gauche, lignes 9 - 26 * | 1,2,6,9,10 | |
| A | FR-A-2 262 291  (TOYO ALUMINIUM)<br>* figures 1, 7 * | 1,2,6,9,10 | |
| A | CH-A-6 381 50  (GROSSENBACHER)<br>* page 3; figure 2 * | 1,4-10 | |
| A | FR-A-2 221 687  (MITSUBISHI)<br>* page 5, ligne 24 - page 6, ligne 4; revendication 1; figure 4 * | 1,4-6,9,<br>10 | **DOMAINES TECHNIQUES RECHERCHES (Int. Cl.5)**<br><br>B 65 D<br>G 01 M |

Le présent rapport de recherche a été établi pour toutes les revendications

| Lieu de la recherche | Date d'achèvement de la recherche | Examinateur |
|---|---|---|
| La Haye | 05 novembre 90 | NEVILLE D.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant